# EUROPÄISCHE PATENTANMELDUNG

(11) **EP 2 241 860 A2**
(43) Veröffentlichungstag der Anmeldung: **20.10.2010**
(21) Anmeldenummer: 10156033.2
(22) Anmeldetag: 10.03.2010
(51) Int. Cl.: G01D 5/20, G01D 11/24

(54) **Induktives Sensormodul und induktiver Näherungssensor**

(30) Priorität: 17.04.2009 DE 102009018644
(71) Anmelder: BALLUFF GmbH, 73765 Neuhausen (DE)
(72) Erfinder: Mahler, Simon, 3014 Bern (CH); Kohler, Martin, 2505 Biel (CH); Kohler, Matthias, 3702 Hondrich (CH); Frauchiger, Michael, 3252 Worben (CH); Gnägi, Christian, 2560 Nidau (CH)
(74) Vertreter: Hoeger, Stellrecht & Partner Patentanwälte

(57) **Zusammenfassung**

Induktives Sensormodul, umfassend eine Spuleneinrichtung und einen Träger, an welchem elektronische Bauelemente angeordnet sind, wobei die Spuleneinrichtung an einer ersten Seite des Trägers angeordnet ist und die elektronischen Bauelemente an einer der ersten Seite abgewandten zweiten Seite des Trägers angeordnet sind.

## Beschreibung

Die Erfindung betrifft ein induktives Sensormodul, umfassend eine Spuleneinrichtung und einen Träger, an welchem elektronische Bauelemente angeordnet sind.

Aus der US 6,486,796 B2 ist eine Detektionseinheit zur Detektion einer relativen Verschiebung der Detektionseinheit zu einem Maßkörper bekannt.

Aus der DE 103 55 003 B4 ist ein induktiver Sensor mit wenigstens einer auf einem Schaltungsträger angeordneten Leiterbahn, die wenigstens eine Spule bildet, sowie mit einem der Spule zugeordneten Spulenkern bekannt, wobei der Schaltungsträger als ebene Leiterplatte ausgebildet ist und wenigstens einen Durchbruch aufweist, der von dem Spulenkern durchsetzt ist und der Spulenkern eine U-Form oder eine Halbtoroidform aufweist.

Aus der EP 1 450 135 A1 ist ein induktiver Sensor, bestehend aus mindestens zwei Leiterplatten, bekannt, wobei auf der ersten Leiterplatte Empfängerleiterbahnen aufgebracht sind und auf der zweiten Leiterplatte Bauelemente einer Auswerteelektronik zum Auswerten von Signalen angeordnet sind, welche von den Empfängerleiterbahnen herrühren, wobei die beiden Leiterplatten sandwichartig zusammengefügt sind und zumindest ein Bauelement der Auswerteelektronik zwischen den beiden Leiterplatten untergebracht ist.

Aus der DE 199 03 585 A1 ist ein Halbleitersensor mit einem Halbleitersensorchip zum Erfassen einer physikalischen Größe, die in einer rechtwinklig zu der Chipoberfläche verlaufenden Richtung einwirkt, und einem Gehäuse zur Aufnahme des Halbleitersensorschips bekannt. Eine für die Montage des Halbleitersensorchips vorgesehene Hauptfläche ist so ausgebildet, dass sie in einem vorbestimmten Winkel mit Bezug zu der Oberfläche einer gedruckten Leiterplatte verläuft, die für die Montage des Gehäuses vorgesehen ist. Die Hauptfläche ist mit einer Mehrzahl von Anschlüssen entlang zweier sich gegenüberliegender Seiten versehen.

Aus der DE 43 14 296 A1 ist eine Sensoreinheit mit einem ein Gehäuseteil aufweisenden Sensor und mit einer die Sensorsignale verarbeitenden Elektronikplatine bekannt, wobei die Elektronikplatine mit dem Gehäuseteil des Sensors über ein Halteteil elektrisch leitend verbunden ist.

Der Erfindung liegt die Aufgabe zugrunde, ein induktives Sensormodul der eingangs genannten Art bereitzustellen, welches mit geringen Abmessungen auf einfache Weise herstellbar ist.

Diese Aufgabe wird bei dem eingangs genannten induktiven Sensormodul erfindungsgemäß dadurch gelöst, dass die Spuleneinrichtung an einer ersten Seite des Trägers angeordnet ist und die elektronischen Bauelemente an einer der ersten Seite abgewandten zweiten Seite des Trägers angeordnet sind.

Bei der erfindungsgemäßen Lösung ist die Spuleneinrichtung an einer Vorderseite des Trägers angeordnet und an einer gegenüberliegenden Rückseite des Trägers sind die elektronischen Bauelemente angeordnet und insbesondere ist mindestens teilweise eine Auswerteeinrichtung angeordnet. Dadurch ergibt sich eine optimierte Platznutzung. Es wird ein Sensormodul bereitgestellt, welches bezüglich der Sensorfunktion autark ist. Es muss lediglich mit elektrischer Energie versorgt werden und entsprechende Sensorsignale müssen abgeführt werden. Es ist aber keine außerhalb des Sensormoduls liegende weitere Auswerteeinrichtung notwendig.

Das induktive Sensormodul lässt sich mit wenigen Schritten herstellen. Insbesondere ist eine Bestückung des Trägers auf einfache Weise möglich. Beispielsweise lassen sich SMD-Verfahren einsetzen.

Insbesondere umfasst die Spuleneinrichtung einen Schalenkern und mindestens eine Spule. Dadurch ergibt sich eine optimierte Sensorfunktion.

Es ist dann vorteilhaft, wenn der Schalenkern an einer Platine sitzt, wobei die Platine an der ersten Seite des Trägers angeordnet ist. Dadurch lässt sich beispielsweise auf einfache Weise eine Kontaktierung einer Spule mit der Platine bei der Herstellung des Sensormoduls realisieren und die Spuleneinrichtung lässt sich wiederum auf einfache Weise an dem Träger einschließlich elektrischer Kontaktierung fixieren.

Insbesondere weist die Platine elektrische Kontaktfelder auf, welche von einer dem Schalenkern zugewandten Seite zu dem Träger elektrische Kontaktpfade bereitstellen. An den elektrischen Kontaktfeldern ist die Platine durchkontaktiert. Dadurch lässt sich auf einfache Weise der elektrische Kontakt zwischen der Spuleneinrichtung und dem Träger herstellen und insbesondere wird der elektrische Kontakt durch die Verbindung und Fixierung der Platine an dem Träger hergestellt. Dadurch lassen sich die Herstellungsschritte für das Sensormodul minimieren.

Ganz besonders vorteilhaft ist es, wenn der Schalenkern mindestens eine Ausnehmung aufweist, welche bis zur Platine durchgeht. Die mindestens eine Ausnehmung ist dabei auf entsprechende elektrische Kontaktfelder ausgerichtet. Dadurch lässt sich auf einfache Weise eine elektrische Verbindung der mindestens einen Spule mit den Kontaktfeldern herstellen und dadurch wiederum lässt sich auf einfache Weise eine elektrische Kontaktierung der mindestens einen Spule mit dem Träger und den dortigen elektronischen Bauelementen herstellen. Durch die mindestens eine Ausnehmung kann von einer Oberseite her zugegriffen werden. Beispielsweise lassen sich dadurch Anschlusslitzen der mindestens einen Spule über Thermokompressionsschweißen mit den elektrischen Kontaktfeldern verbinden.

Es ist dann vorteilhaft, wenn Anschlusslitzen der mindestens einen Spule in der mindestens einen Ausnehmung angeordnet sind. Dadurch ergibt sich eine einfache Herstellbarkeit der elektrischen Kontaktierung.

Ganz besonders vorteilhaft ist es, wenn elektronische Bauelemente und vorzugsweise alle elektronischen Bauelemente einer Auswerteeinrichtung an der zweiten Seite des Trägers angeordnet sind. Dadurch lässt sich ein "autarkes" induktives Sensormodul bereitstellen, welches universell einsetzbar ist. Aus dem gleichen Grund ist es vorteilhaft, wenn alle Elemente einer internen Anschlusseinrichtung zur externen Kommunikation über eine elektrische Anschlusseinrichtung an der zweiten Seite des Trägers angeordnet sind.

Günstig ist es, wenn eine Mehrzahl von Stiftelementen vorgesehen ist, welche über die zweite Seite des Trägers hinausragen. Die Stiftelemente lassen sich dazu nutzen, das Sensormodul mechanisch und/oder elektrisch zu fixieren, um einen kompletten induktiven Näherungssensor einschließlich externer Anschlusseinrichtung bereitzustellen. Beispielsweise lässt sich das Sensormodul über die Stiftelemente auf einer Platine oder dergleichen eines induktiven Näherungssensors einschließlich elektrischer Anschlusseinrichtung aufstecken. Über die Stiftelemente ist es auch möglich, ein Kabel anzuschließen. Die Stiftelemente sind quer und insbesondere senkrecht zu der Oberfläche der zweiten Seite des Trägers orientiert.

Günstig ist es, wenn die Stiftelemente in Ausnehmungen des Trägers fixiert sind. Beispielsweise sind diese eingepresst und zusätzlich über Kaltschweißen gesichert. Dadurch ergibt sich bei einfacher Herstellbarkeit eine universelle Anwendbarkeit.

Günstig ist es, wenn eine mechanische Fixierungsmöglichkeit des Sensormoduls über die Stiftelemente realisiert ist. Dadurch ergeben sich umfangreiche Anwendungsmöglichkeiten.

Die Stiftelemente stellen den elektrischen Kontakt zu dem Sensormodul bereit. Über die Stiftelemente lässt sich bei entsprechendem Anschluss eine externe Anschlusseinrichtung (wie ein Kabel- oder ein Steckeranschluss) die Energieversorgung des induktiven Sensormoduls realisieren. Ferner lassen sich Sensorsignale abführen.

Bei einem Ausführungsbeispiel sind drei Stiftelemente vorgesehen. Zwei Stiftelemente dienen zur elektrischen Energieversorgung und ein Stiftelement dient zur Bereitstellung eines Sensorsignals.

Bei einer Ausführungsform ist an dem Träger an der zweiten Seite ein Kabelfixierungselement angeordnet. Über dieses Kabelfixierungselement lässt sich ein Kabel an dem Sensormodul fixieren.

Ganz besonders vorteilhaft ist es, wenn das Kabelfixierungselement an Stiftelementen fixiert ist. Die Stiftelemente sind Elemente für den elektrischen Kontakt des Sensormoduls mit der Außenwelt. Sie können auch als mechanisches Fixierungsmittel für das Kabelfixierungselement dienen.

Günstig ist es, wenn das Kabelfixierungselement Fixierungsbereiche zur jeweiligen Fixierung einer Kabelader aufweist. Dadurch lässt sich eine elektrische Verbindung zwischen dem induktiven Sensormodul und einem Kabel als Verbindung zur Außenwelt auf einfache Weise herstellen. Beispielsweise wird diese Verbindung durch Klemmung, Lötung oder Klebung hergestellt.

Insbesondere ist an einem Fixierungsbereich eine Kabelader mit einem Stiftelement verbindbar, um eine elektrische Verbindung herzustellen.

Bei einer Ausführungsform sind die Fixierungsbereiche als Klemmbereiche ausgebildet, welche zur Klemmung der jeweiligen Adern dienen.

Es ist ferner günstig, wenn das Kabelfixierungselement einen Aufnahmebereich für ein Kabel aufweist. In diesem Aufnahmebereich lässt sich das Kabel in einem Teilbereich führen und gegebenenfalls auch fixieren.

Es ist dann günstig, wenn der mindestens eine Aufnahmebereich eine Kabelzuführung in einer Richtung parallel zur Abstandsrichtung zwischen der Spuleneinrichtung und dem Träger ermöglicht und/oder eine Kabelzuführung in einer Richtung quer zu dieser Abstandsrichtung ermöglicht. Diese Abstandsrichtung ist auch die Abstandsrichtung zwischen der ersten Seite und der zweiten Seite des Trägers. Bei einer parallelen Ausrichtung des Kabels ist eine axiale Kabelzuführung zu dem Sensormodul realisiert. Bei einer Ausrichtung quer und insbesondere senkrecht dazu ist eine radiale Kabelzuführung realisiert. Insbesondere sind an demselben Kabelfixierungselement beide Kabelzuführungsmöglichkeiten realisiert.

Es ist günstig, wenn das Kabelfixierungselement optisch transparent ist. Dadurch lassen sich optische Signale beispielsweise von einer oder mehreren Leuchtdioden, welche an der zweiten Seite des Trägers angeordnet sind, durch das Kabelfixierungselement hindurch erkennen.

Bei einer Ausführungsform ist das Sensormodul knopfförmig ausgebildet mit einem mindestens näherungsweise kreisförmigen Außenkonturquerschnitt. Dadurch ergibt sich eine optimierte Platznutzung mit Minimierung der äußeren Abmessungen des Sensormoduls.

Die Erfindung betrifft ferner einen induktiven Näherungssensor, welcher mindestens ein erfindungsgemäßes induktives Sensormodul umfasst. Der induktive Näherungssensor erlaubt auf einfache Weise auch den Anschluss an die Außenwelt beispielsweise über einen Steckeranschluss oder Kabelanschluss. Der induktive Näherungssensor kann dabei als analoger oder digitaler Näherungssensor bzw. Abstandssensor bzw. Wegsensor ausgebildet sein.

Insbesondere ist eine elektrische Anschlusseinrichtung vorgesehen, welche elektrisch mit dem mindestens einen Sensormodul verbunden ist. Über die elektrische Anschlusseinrichtung, welche insbesondere standardisiert ist, lässt sich dann das Sensormodul mit elektrischer Energie versorgen und es lassen sich Sensorsignale über die elektrische Anschlusseinrichtung abführen.

Bei einer Ausführungsform sitzt das mindestens eine Sensormodul direkt an der elektrischen Anschlusseinrichtung. Dadurch lässt sich ein induktiver Näherungssensor mit geringen Höhenabmessungen realisieren.

Bei einer weiteren Ausführungsform sitzt das mindestens eine Sensormodul an einer Verbindungseinrichtung, mit welcher die elektrische Anschlusseinrichtung zumindest elektrisch verbunden ist. Die Verbindungseinrichtung stellt eine mechanische Fixierung des mindestens einen Sensormoduls bereit und sorgt für einen elektrischen Anschluss. Die Verbindungseinrichtung koppelt dann das mindestens eine Sensormodul an die elektrische Anschlusseinrichtung. Die elektrische Anschlusseinrichtung kann dabei auch an der Verbindungseinrichtung sitzen.

Die nachfolgende Beschreibung bevorzugter Ausführungsformen dient im Zusammenhang mit den Zeichnungen der näheren Erläuterung der Erfindung. Es zeigen:
- Figur 1: eine perspektivische Darstellung eines Ausführungsbei- spiels eines erfindungsgemäßen induktiven Sensormoduls;
- Figur 2: eine Seitenansicht des induktiven Sensormoduls gemäß Figur 1;
- Figur 3: eine Draufsicht auf das induktive Sensormodul gemäß Figur 1;
- Figur 4: eine Schnittansicht längs der Linie 4-4 des induktiven Sensormoduls gemäß Figur 3;
- Figur 5: eine Schnittansicht längs der Linie 5-5 des induktiven Sensormoduls gemäß Figur 3;
- Figur 6(a) bis (d): unterschiedliche Bauelemente einer Spuleneinrichtung eines Ausführungsbeispiels eines induktiven Sensor- moduls;
- Figur 6(e), (f): eine Spuleneinrichtung in Draufsicht;
- Figur 7: ein Ausführungsbeispiel eines induktiven Sensormoduls mit Kabelanschluss;
- Figur 8: ein weiteres Ausführungsbeispiel eines induktiven Sensor- moduls mit Kabelanschluss;
- Figur 9: eine Teildarstellung eines ersten Ausführungsbeispiels eines induktiven Näherungssensors, welcher ein induk- tives Sensormodul aufweist;
- Figur 10: ein zweites Ausführungsbeispiel eines induktiven Nähe- rungssensors, welcher induktive Sensormodule umfasst; und
- Figur 11: ein drittes Ausführungsbeispiel eines induktiven Nähe- rungssensors mit einem induktiven Sensormodul.

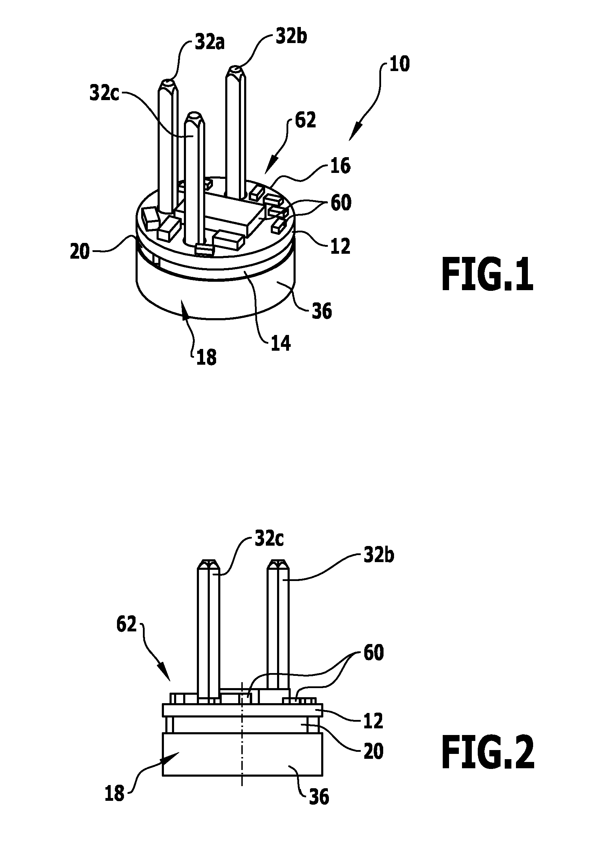

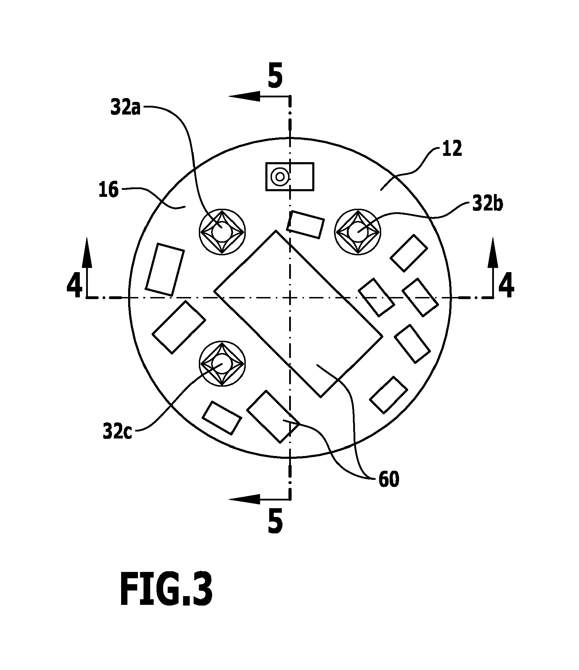

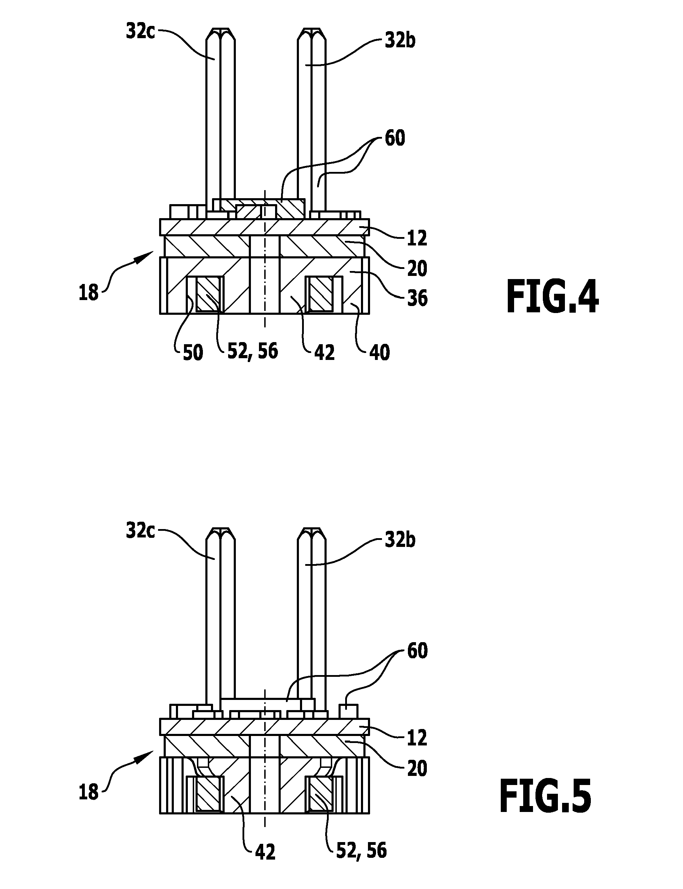

Ein Ausführungsbeispiel eines induktiven Sensormoduls, welches in den Figuren 1 bis 5 gezeigt und dort mit 10 bezeichnet ist, umfasst einen Träger 12 (Hauptplatine 12). Der Träger 12 hat eine erste Seite 14 (Vorderseite) und eine der ersten Seite abgewandte zweite Seite 16 (Rückseite). Zwischen der ersten Seite 14 und der zweiten Seite 16 erstreckt sich der Träger 12. Der Träger 12 ist insbesondere plattenförmig ausgebildet.

Bei einem Ausführungsbeispiel ist der Träger 12 als Kreisscheibe ausgebildet.

An der ersten Seite 14 des Trägers 12 sitzt eine Spuleneinrichtung 18. Die Spuleneinrichtung 18 umfasst eine oder mehrere Spulen als sensitive Elemente.

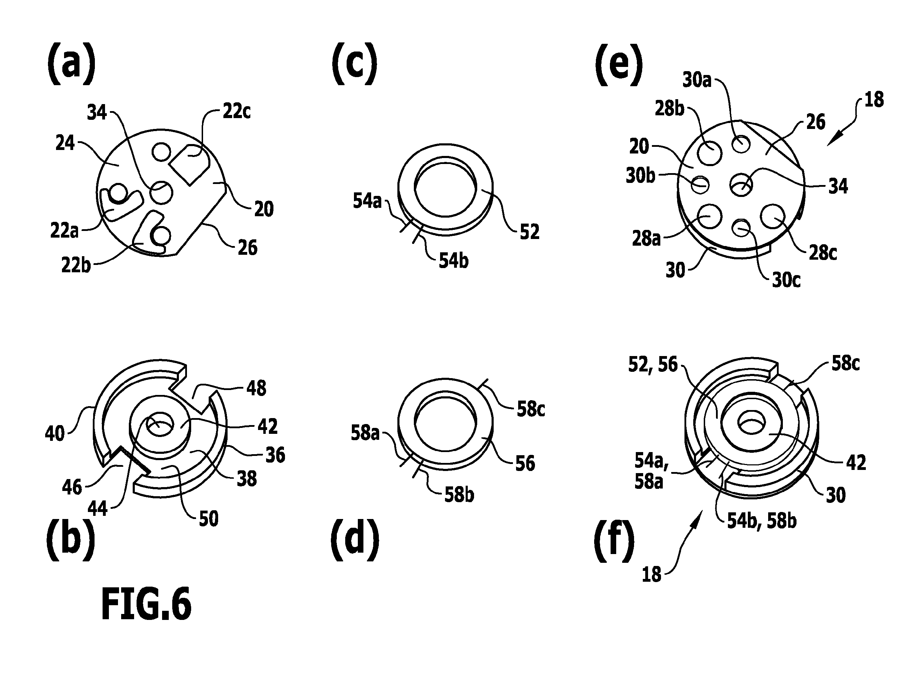

Bei einem Ausführungsbeispiel (Figur 6) weist die Spuleneinrichtung 18 eine Platine 20 auf. Die Platine 20 ist plattenförmig ausgestaltet. An der Platine 20 sind Kontaktfelder 22a, 22b, 22c angeordnet. Diese Kontaktfelder 22a, 22b, 22c sind an einer ersten Seite 24 angeordnet. Sie stehen dabei in elektrischem Kontakt jeweils mit einem Kontaktpfad, welcher von der ersten Seite 24 zu einer zweiten Seite 26 führt. Die zweite Seite 26 ist der ersten Seite 24 abgewandt. Über die zweite Seite 26 ist die Spuleneinrichtung 18 an dem Träger 12, und zwar an dessen erster Seite 14, fixiert.

Die Kontaktpfade mit entsprechenden Kontaktfeldern an der zweiten Seite 26 sind in Figur 6(e) mit dem Bezugszeichen 28a, 28b, 28c angedeutet. Der Kontaktpfad 28a ist dabei beispielsweise dem Kontaktfeld 22a zugeordnet usw.

Über die Kontaktpfade 28a, 28b, 28c wird der elektrische Kontakt der Spuleneinrichtung 18 mit dem Träger 12 hergestellt.

Die Platine 20 weist ferner Ausnehmungen 30a, 30b, 30c auf, in welchen, wie unten noch näher erläutert ist, Stiftelemente 32a, 32b, 32c in einem Teilbereich angeordnet sind.

Ferner weist die Platine 20 eine mittlere Ausnehmung 34 auf, welche der Zentrierung dient.

Die Spuleneinrichtung 18 umfasst ferner einen Schalenkern 36. Dieser hat einen Boden 38, über welchem eine Wand 40 absteht. In einem zentralen Bereich umfasst der Schalenkern 36 ferner eine von dem Boden 38 abstehende ringförmige Nabe 42. Die Nabe 42 umgibt eine Ausnehmung 44, welche zu der mittleren Ausnehmung 34 der Platine 20 korrespondiert.

Der Schalenkern 36 weist dabei eine im Querschnitt kreisförmige Außenkontur auf. Die Wand 40 ist dabei unterbrochen; der Schalenkern 36 weist Ausnehmungen 46, 48 auf, welche, wenn der Schalenkern 36 auf die Platine 20 aufgesetzt ist, die Kontaktfelder 22a, 22b, 22c frei lassen, so dass in Richtung der ersten Seite 24 der Platine 20 hin auf diese Kontaktfelder 22a, 22b, 22c zugegriffen werden kann, um insbesondere Litzen von Spulen der Spuleneinrichtung 18 mit den entsprechenden Kontaktfeldern 22a, 22b, 22c insbesondere verschweißen oder verlöten zu können.

Der Schalenkern 36 weist einen Aufnahmebereich 50 auf, welcher zwischen der Nabe 42 und der Wand 40 liegt. Dieser Aufnahmebereich 50 ist insbesondere ringförmig ausgestaltet.

In diesem Aufnahmebereich 50 sitzt mindestens eine Spule. Bei einem Ausführungsbeispiel sitzt in dem Aufnahmebereich 50 eine Spule 52. Diese weist Anschlusslitzen 54a, 54b auf. Diese sind mit den Kontaktfeldern 22a, 22b beispielsweise durch Thermoschweißen oder Löten verbunden.

Bei einem anderen Ausführungsbeispiel ist eine Spule 56 mit Anschlusslitzen 58a, 58b, 58c vorgesehen, welche entsprechend mit den Kontaktfeldern 22a, 22b, 22c elektrisch verbunden sind und insbesondere verschweißt oder verlötet sind.

Die Anschlusslitzen 54a, 54b bzw. 58a, 58b, 58c liegen dabei in den Ausnehmungen 46 und 48, um einen Zugriff von oben zur Herstellung der elektrischen Verbindung zu ermöglichen.

Auch andere Spulenanordnungen beispielsweise mit Sendespule und Empfangsspule und/oder zusätzlicher Kompensationsspule usw. sind möglich.

Der Schalenkern 36 ist aus einem geeigneten Material mit entsprechenden magnetischen Eigenschaften hergestellt.

Der Schalenkern 36 mit der Spule 52 bzw. 56 ist auf der Platine 20 angeordnet. Wie oben erwähnt ist die gesamte Spuleneinrichtung 18 an dem Träger 12 an dessen erster Seite 14 fixiert.

An der zweiten Seite 16 des Trägers 12 sind abgewandt zu der Spuleneinrichtung 18 elektronische Bauelemente 60 des Sensormoduls 10 angeordnet. Insbesondere ist mindestens teilweise eine Auswerteeinrichtung 62 des Sensormoduls 10 an der zweiten Seite 16 des Trägers 12 angeordnet. Ferner ist eine (interne) Anschlusseinrichtung an der zweiten Seite 16 angeordnet. Vorzugsweise ist die Auswerteeinrichtung 62 (und die interne Anschlusseinrichtung) des Sensormoduls 10 vollständig an dem Träger 12 angeordnet.

Es ist dann ein komplettes induktives Sensormodul 10 bereitgestellt, welches insbesondere nach Verbindung mit einer externen Anschlusseinrichtung einen induktiven Näherungssensor bilden kann.

Die Stiftelemente 32a, 32b, 32c, welche Kontaktstifte bilden, sind an entsprechenden Ausnehmungen des Trägers 12 fixiert und sind in die Ausnehmungen 30a, 30b, 30c der Platine 20 eingetaucht. Die Stiftelemente 32a, 32b, 32c sind an dem Träger 12 (und der Platine 20) insbesondere durch Verpressen fixiert.

Die Stiftelemente 32a, 32b, 32c ragen quer und insbesondere senkrecht über die zweite Seite 16 des Trägers 12 nach oben hinaus.

Bei einem Ausführungsbeispiel sind drei Stiftelemente vorgesehen für eine Stromversorgung und für ein Ausgangssignal.

Die elektronischen Bauelemente 60 der Auswerteeinrichtung 62 sind zwischen den Bereichen der Stiftelemente 32a, 32b, 32c angeordnet, an welchen diese an dem Träger 12 fixiert sind.

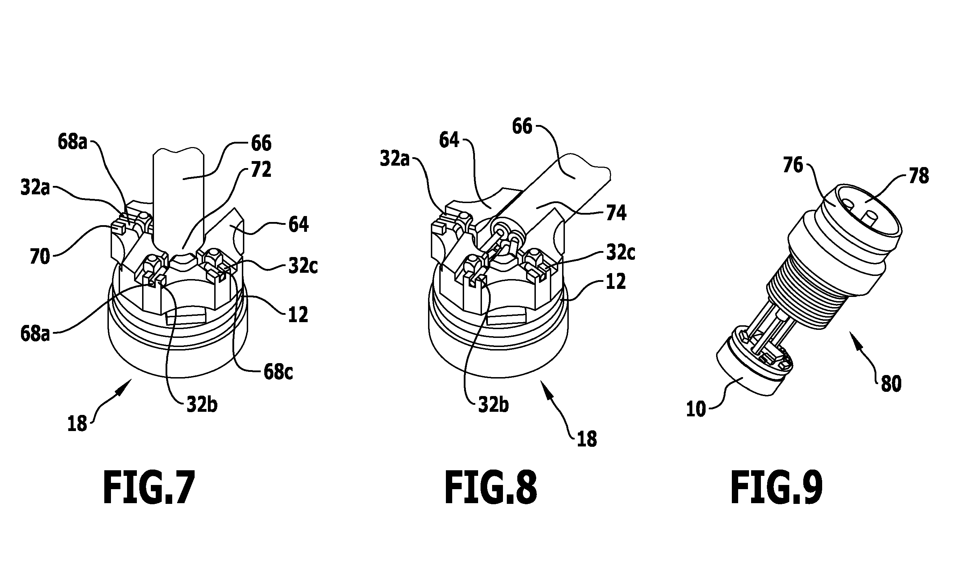

Bei einem Ausführungsbeispiel, welches in den Figuren 7 und 8 gezeigt ist, ist an dem Träger 12 an der zweiten Seite 16 ein Kabelfixierungselement 64 angeordnet. Das Kabelfixierungselement 64 ist an den Stiftelementen 32a, 32b, 32c mechanisch fixiert. Das Kabelfixierungselement 64 dient zur Fixierung eines Kabels 66 an dem entsprechenden Sensormodul 10. Das Kabel 66 weist Adern 68a, 68b, 68c auf. Das Kabelfixierungselement 64 weist im Bereich der Stiftelemente 32a, 32b, 32c als Fixierungsbereiche jeweilige Klemmbereiche 70 auf, an welchen sich die Adern (beispielsweise 68a) mit dem jeweiligen Stiftelement (beispielsweise 32a) verklemmen lassen. Dadurch lässt sich auf einfache Weise ein elektrischer Kontakt herstellen zur Energieversorgung des Sensormoduls 10 und zur Ableitung von Sensorsignalen.

Das Kabelfixierungselement 64 weist einen ersten Aufnahmebereich 72 (Figur 7) für das Kabel 66 auf. Dieser erste Aufnahmebereich 72 ist zentral angeordnet. Das Kabel 66 lässt sich in einem Teilbereich in einer (axialen) Richtung parallel zu der Abstandsrichtung zwischen der ersten Seite 14 und der zweiten Seite 16 des Trägers 12 eintauchen. Die Adern 68a, 68b, 68c werden dann quer weggeführt und an den jeweiligen Klemmbereichen 70 verklemmt.

Das Kabelfixierungselement 64 weist ferner einen zweiten Aufnahmebereich 74 auf, welcher zwischen äußeren Klemmbereichen liegt (Figur 8). Über den zweiten Aufnahmebereich 74 lässt sich das Kabel 66 seitlich, d. h. quer und insbesondere senkrecht (in radialer Richtung) zu der Abstandsrichtung zwischen der ersten Seite 14 und der zweiten Seite 16 des Trägers 12 einführen.

Insbesondere sind der erste Aufnahmebereich 72 und der zweite Aufnahmebereich 74 an demselben Kabelfixierungselement 64 realisiert, so dass dasselbe Kabelfixierungselement 64 für unterschiedliche Anwendungen verwendbar ist.

Bei dem Ausführungsbeispiel gemäß den Figuren 7 und 8 dienen die Stiftelemente 32a, 32b, 32c zur Fixierung des Kabelfixierungselements 64 und weiterhin zur Herstellung des elektrischen Kontakts. Die Energieversorgung erfolgt über das Kabel 66. Ferner erfolgt eine Signalableitung über eine entsprechende Ader des Kabels 66.

Bei einem weiteren Ausführungsbeispiel, welches in Figur 9 in einer Teildarstellung schematisch gezeigt ist (ein Gehäuse ist nicht dargestellt), ist ein Sensormodul 10 über die Stiftelemente 32a, 32b, 32c mechanisch und elektrisch mit einer elektrischen Anschlusseinrichtung 76 zum externen Anschluss verbunden. Die elektrische Anschlusseinrichtung 76 umfasst einen (dreiadrigen) Steckeranschluss 78, an dem ein Stecker fixierbar ist. Dadurch ist ein Anschluss an die "Außenwelt" möglich, um eine Energieversorgung bereitzustellen und Sensorsignale abführen zu können.

Es ist dadurch ein induktiver Näherungssensor 80 gebildet, welcher insbesondere mit einer kleinen Länge (parallel zu der Abstandsrichtung zwischen der ersten Seite 14 und der zweiten Seite 16) realisierbar ist.

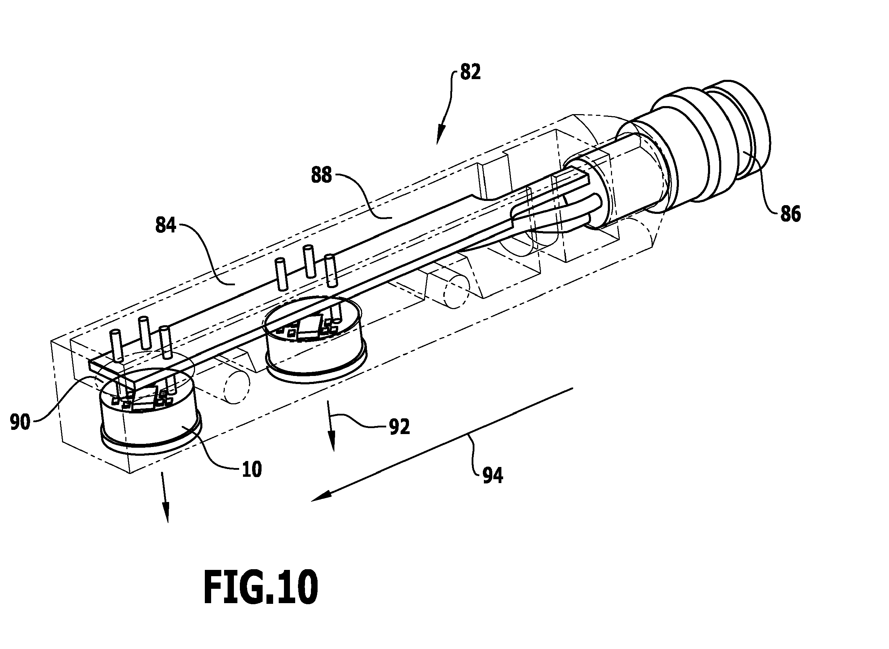

Ein weiteres Ausführungsbeispiel eines induktiven Näherungssensors, welches in Figur 10 gezeigt und dort mit 82 bezeichnet ist, umfasst ein Gehäuse 84. Es ist eine elektrische Anschlusseinrichtung 86 für einen Steckeranschluss vorgesehen. In dem Gehäuse ist eine Verbindungseinrichtung 88 angeordnet, welche mit der elektrischen Anschlusseinrichtung 86 verbunden ist.

Die Verbindungseinrichtung 88 weist mindestens einen Aufnahmeplatz 90 für ein Sensormodul 10 auf. Bei dem in Figur 10 gezeigten Ausführungsbeispiel sind zwei Aufnahmeplätze 90 vorgesehen für jeweilige Sensormodule 10. Diese sind an den Aufnahmeplätzen 90 fixiert, wobei die Fixierung insbesondere durch Aufsteckung erfolgt.

Die Sensormodule 10 sind mit der Verbindungseinrichtung 88 elektrisch und mechanisch verbunden. Die Energieversorgung der Sensormodule 10 erfolgt über die Verbindungseinrichtung 88. Ferner erfolgt eine Signalableitung über die Verbindungseinrichtung 88. Es lassen sich dabei die Sensorsignale der jeweiligen Sensormodule 10 getrennt ableiten.

Bei dem in Figur 10 gezeigten Ausführungsbeispiel liegen Blickrichtungen 92 der Sensormodule 10 quer zu einer Längserstreckungsrichtung 94 des Gehäuses 84.

Die elektrische Anschlusseinrichtung 86 ist in der Längserstreckungsrichtung 94 angeordnet.

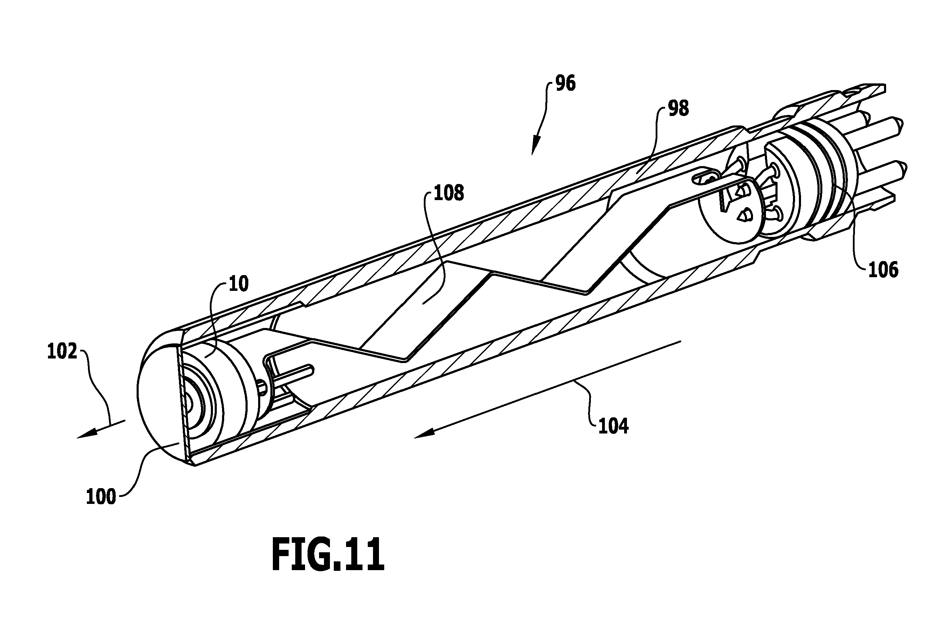

Ein drittes Ausführungsbeispiel eines erfindungsgemäßen induktiven Näherungssensors, welches in Figur 11 gezeigt und dort mit 96 bezeichnet ist, umfasst ein Gehäuse 98. An einer Stirnseite 100 des Gehäuses 98 ist ein Sensormodul 10 angeordnet. Eine Blickrichtung 102 des Sensormoduls 10 ist parallel zu einer Längserstreckungsrichtung 104 des Gehäuses 96.

In der Längserstreckungsrichtung 104 ist ferner eine elektrische Anschlusseinrichtung 106 angeordnet.

In dem Gehäuse ist eine Verbindungseinrichtung 108 positioniert, an welcher das Sensormodul 10 mechanisch fixiert ist. Die Verbindungseinrichtung 108 sorgt ferner für die elektrische Verbindung mit dem Sensormodul 10 und der elektrischen Anschlusseinrichtung 106.

Das Sensormodul 10 umfasst die interne Anschlusseinrichtung zur Verbindung mit einer elektrischen Anschlusseinrichtung 76, 86 usw. Die interne Anschlusseinrichtung ist insbesondere an der zweiten Seite 16 des Trägers 12 angeordnet. Die interne Anschlusseinrichtung weist beispielsweise einen Verpolschutz auf, um Zerstörungen durch einen falschen Polanschluss zu vermeiden. Die interne Anschlusseinrichtung kann ferner eine Konstantstromquelle aufweisen, die einen Treiber versorgt. Über den Treiber lässt sich beispielsweise eine Leuchtdiode ansteuern, um einen korrekten und/oder nicht-korrekten Anschluss anzuzeigen.

Das erfindungsgemäße Sensormodul 10 lässt sich mit minimierter Höhe in der Abstandsrichtung zwischen der ersten Seite 14 und der zweiten Seite 16 herstellen. Die elektronischen Bauelemente 60 und insbesondere die vollständige Auswerteeinrichtung 62 sind an der Rückseite des Trägers 12 angeordnet, welcher auch die Spuleneinrichtung 18 hält. Das Sensormodul 10 lässt sich auf vielfältige Weise einsetzen. Induktive Näherungssensoren lassen sich in Modulbauweise realisieren, wie beispielhaft anhand der Figuren 7 bis 11 dargestellt. Das Sensormodul 10 wiederum lässt sich auf einfache Weise mit hohem Automatisierungsgrad herstellen.

Insbesondere lässt sich der Träger 12 über SMD-Verfahren (SMD - Surface Mount Device) herstellen. Anschlusslitzen der Spule 52 bzw. der Spule 56 lassen sich beispielsweise mit der Platine 20 durch Thermokompressionsschweißen in den Ausnehmungen 46, 48 des Schalenkerns 36 verbinden. Die zweite Seite 16 des Trägers 12 lässt sich mit den elektronischen Bauelementen 60 maschinell bestücken und auch eine Lötverbindung lässt sich maschinell herstellen.

Träger 12 (Hauptplatinen) lassen sich im Nutzen einschließlich Bestückung und Setzen der Stiftelemente 32, 32b, 32c beispielsweise durch eine entsprechende Pressmaschine herstellen. Die einzelnen Träger 12 lassen sich dann auf einfache Weise beispielsweise mittels UV-Laserbestrahlung nach der Bestückung trennen. Die Stiftelemente 32a, 32b, 32c lassen sich nach der Einpressung beispielsweise durch Kaltschweißen noch zusätzlich an dem Träger 12 fixieren.

Für den elektrischen Anschluss des Sensormoduls 10 (zur Energieversorgung und zur Abführung von Sensorsignalen und gegebenenfalls auch zur Ansteuerung des Sensormoduls 10) ergeben sich eine Vielzahl von Möglichkeiten. Über das Kabelfixierungselement 64 ist beispielsweise ein axialer oder radialer Kabelabgang möglich.

Vorzugsweise ist das Kabelfixierungselement 64 transparent ausgebildet. Insbesondere handelt es sich um ein Kunststoffteil. Dadurch kann das Kabelfixierungselement 64 auch als Lichtleiter für eine Leuchtdiode wirken, welche an der zweiten Seite 16 des Trägers 12 angeordnet ist.

Weiterhin kann das Kabelfixierungselement 64 für einen entsprechenden Gehäuseabschluss formgebend ausgebildet werden.

Das Sensormodul 10 lässt sich, wie in den Figuren 9 bis 11 beispielhaft dargestellt, auch in andere Gehäuseformen einbauen.

## Patentansprüche

1. Induktives Sensormodul, umfassend eine Spuleneinrichtung (18) und einen Träger (12), an welchem elektronische Bauelemente (60) angeordnet sind, wobei die Spuleneinrichtung (18) an einer ersten Seite (14) des Trägers (12) angeordnet ist und die elektronischen Bauelemente (60) an einer der ersten Seite (14) abgewandten zweiten Seite (16) des Trägers (12) angeordnet sind.

2. Induktives Sensormodul nach Anspruch 1, **dadurch gekennzeichnet, dass** die Spuleneinrichtung (18) einen Schalenkern (36) und mindestens eine Spule (52; 56) umfasst, und insbesondere dass der Schalenkern (36) an einer Platine (20) sitzt, wobei die Platine (20) an der ersten Seite (14) des Trägers (12) angeordnet ist, und insbesondere dass die Platine (20) elektrische Kontaktfelder (22a, 22b, 22c) aufweist, welche von einer dem Schalenkern (36) zugewandten Seite (24) zu dem Träger (12) elektrische Kontaktpfade (28a, 28b, 28c) bereitstellen.

3. Induktives Sensormodul nach Anspruch 2, **dadurch gekennzeichnet, dass** der Schalenkern (36) mindestens eine Ausnehmung (46, 48) aufweist, welche bis zur Platine (20) durchgeht, und insbesondere dass Anschlusslitzen (54a, 54b; 58a, 58b, 58c) der mindestens einen Spule (52; 56) in der mindestens einen Ausnehmung (44, 46) angeordnet sind.

4. Induktives Sensormodul nach einem der vorangehenden Ansprüche, **dadurch gekennzeichnet, dass** elektronische Bauelemente (60) und vorzugsweise alle elektronischen Bauelemente einer Auswerteeinrichtung (62) an der zweiten Seite (16) des Trägers (12) angeordnet sind.

5. Induktives Sensormodul nach einem der vorangehenden Ansprüche, **dadurch gekennzeichnet, dass** eine interne Anschlusseinrichtung an der zweiten Seite (16) des Trägers (12) angeordnet ist.

6. Induktives Sensormodul nach einem der vorangehenden Ansprüche, **gekennzeichnet durch** eine Mehrzahl von Stiftelementen (32a, 32b, 32c), welche über die zweite Seite des Trägers (12) hinausragen, und insbesondere dass die Stiftelemente (32a, 32b, 32c) in Ausnehmungen des Trägers (12) fixiert sind.

7. Induktives Sensormodul nach Anspruch 6, **gekennzeichnet durch** eine mechanische Fixierungsmöglichkeit des Sensormoduls über die Stiftelemente (32a, 32b, 32c).

8. Induktives Sensormodul nach Anspruch 6 oder 7, **dadurch gekennzeichnet, dass** die Stiftelemente (32a, 32b, 32c) den elektrischen Kontakt zu dem induktiven Sensormodul bereitstellen.

9. Induktives Sensormodul nach einem der Ansprüche 6 bis 8, **gekennzeichnet durch** drei Stiftelemente (32a, 32b, 32c).

10. Induktives Sensormodul nach einem der vorangehenden Ansprüche, **dadurch gekennzeichnet, dass** an dem Träger (12) an der zweiten Seite (16) ein Kabelfixierungselement (64) angeordnet ist, und insbesondere dass das Kabelfixierungselement (64) an Stiftelementen (32a, 32b, 32c) fixiert ist, und insbesondere dass das Kabelfixierungselement (64) Fixierungsbereiche (70) zur jeweiligen Fixierung einer Kabelader (68a; 68b; 68c) aufweist, und insbesondere dass an einem Fixierungsbereich (70) eine Kabelader (68a; 68b; 68c) mit einem Stiftelement (32a; 32b; 32c) verbindbar ist, und insbesondere dass ein Fixierungsbereich als Klemmbereich (70) zur Klemmung einer jeweiligen Kabelader (68a; 68b; 68c) ausgebildet ist.

11. Induktives Sensormodul nach Anspruch 10, **dadurch gekennzeichnet, dass** das Kabelfixierungselement (64) mindestens einen Aufnahmebereich (72; 74) für ein Kabel (66) aufweist.

12. Induktives Sensormodul nach Anspruch 11, **dadurch gekennzeichnet, dass** der mindestens eine Aufnahmebereich (72; 74) eine Kabelzuführung in einer Richtung parallel zur Abstandsrichtung zwischen der Spuleneinrichtung (18) und dem Träger (12) ermöglicht und/oder eine Kabelzuführung in Richtung quer zu dieser Abstandsrichtung ermöglicht.

13. Induktives Sensormodul nach einem der Ansprüche 10 bis 12, **dadurch gekennzeichnet, dass** das Kabelfixierungselement (64) optisch transparent ausgebildet ist.

14. Induktiver Näherungssensor, umfassend mindestens ein Sensormodul (10) gemäß einem der vorangehenden Ansprüche.

15. Induktiver Näherungssensor nach Anspruch 14, **gekennzeichnet durch** eine elektrische Anschlusseinrichtung (66; 76; 86; 106), welche elektrisch mit dem mindestens einen Sensormodul (10) verbunden ist, und insbesondere dass das mindestens eine Sensormodul (10) direkt an der elektrischen Anschlusseinrichtung (66; 76) sitzt, oder dass das mindestens eine Sensormodul (10) an einer Verbindungseinrichtung (88; 108) sitzt, mit welcher die elektrische Anschlusseinrichtung (86; 106) zumindest elektrisch verbunden ist.
